# EUROPEAN PATENT SPECIFICATION

(11) **EP 2 927 832 B1**
(45) Date of publication and mention of the grant of the patent: **14.06.2017**
(21) Application number: 15153367.6
(22) Date of filing: 30.01.2015
(51) Int. Cl.: G06F 21/31

(54) **METHOD, DEVICE AND COMPUTER READABLE MEDIUM FOR DECRYPTION**
VERFAHREN, VORRICHTUNG UND COMPUTERLESBARES MEDIUM ZUR ENTSCHLÜSSELUNG
PROCÉDÉ, DISPOSITIF ET SUPPORT LISIBLE PAR ORDINATEUR POUR LE DÉCRYPTAGE

(30) Priority: 31.03.2014 CN 201410125595
(43) Date of publication of application: 07.10.2015
(73) Proprietor: Xiaomi Inc., Haidian District Beijing 100085 (CN)
(72) Inventor: Liu, Daokuan, 100085 Haidian District Beijing (CN); Wang, Bin, 100085 Haidian District Beijing (CN); Weng, Haibin, 100085 Haidian District Beijing (CN)
(74) Representative: Sadler, Peter Frederick

(56) References cited:
- EP-A1- 2 251 811
- EP-A2- 2 634 681
- US-A1- 2014 066 017

## Description

### TECHNICAL FIELD

The present disclosure relates to a field of computer technology, and more particularly to a method for decryption and a device thereof

### BACKGROUND

With rapid development of terminal technology and communication technology, mobile terminals such as mobile phones and tablet computers are increasing in popularity and becoming important tools in people's daily life and work. An important function of the terminal is encryption, such as screen locking encryption, application encryption or the like. For example, a lock screen state may be encrypted so that if a user inputs decryption information which meets a preset decryption condition, the terminal is switched from the lock screen state to an unlock screen state.

Slip gesture encryption is a most common encryption and decryption manner, a corresponding process of which is as follows. Nine reference points (which are divided into three rows and thus three points per row) are displayed on a screen; a user may set a decryption condition, that is, the user slips the screen with a finger thereof and a touch signal of the finger passes through one or more reference points in order, then the terminal records the reference points through which the touch signal passes and the order thereof as the decryption condition; the user may slip the screen with a finger thereof in performing the decryption, and the terminal is triggered to be decrypted if the touch signal passes through the above points in the above order.

During the implementation of the disclosure, the present inventors have found that there are at least the following problems in the related art.

A curved slip trace may be easily left on the screen in the above manner during the decryption, so that the decryption condition may easily be cracked, and thus data security of the terminal is severely affected.

In US patent application US 2014/0066017 there is described an unlock method for releasing a lock mode of a mobile terminal by tracking a trajectory corresponding to a touch-and-drag operation. It is determined whether one or more intersections occur on the trajectory, and lock mode is released if one or more intersections occur.

In EP patent application EP 2251811 there is described an authentication method for entering a password. The password is configured of three elements: a mark representing a starting point position, a number of rotations representing repetitions of a trajectory from the starting point and a rotation directions representing a direction of movement around a central axis line of a circle.

### SUMMARY

The invention is defined in the claims, to which reference is now directed. Preferred features are set out in the dependent claims.

To overcome problems in the related art, the disclosure provides a method and a device for decryption.

According to a first aspect of the disclosure, a method for decryption is provided. The method includes: detecting a touch signal moving on a screen over a path having a start point and an end point; and being triggered to enter an unlocked state if the number of loops moved by the touch signal is the same as a preset reference number of loops. Detecting the touch signal includes detecting a first moving direction of the touch signal. Triggering the unlocked state also requires that the first moving direction is the same as a preset reference direction and wherein the preset reference direction is clockwise or anticlockwise. The method further comprises determining whether the number of loops moved by the touch signal is the same as the preset reference number of loops by the process of detecting that a motion trace of the touch signal forms a first closed shape, increasing the recorded number of the closed shapes by one, removing the motion trace previously determined, and repeating the process for subsequent motion traces until the touch signal has ended. Through the disclosure, the data security of the terminal may be improved.

Optionally the method further comprises displaying at least two reference points on the screen; and determining whether the path of the touch signal passes through the reference points. Triggering the unlocked state further requires that: the touch signal passes through a certain number of the reference points; the touch signal meets a preset initial condition and/or a preset end condition, the initial condition being that an initial location of the touch signal is a location of a first one of the reference points, and the end condition being that a last reference point through which the touch signal passes is a second one of the reference points after the touch signal has moved the number of loops; and that the path of the touch signal passes through a further one of the reference points, different to either of the initial or last reference points, at an intermediate position along the path between the start and the end of the path.

Optionally, the being triggered to enter the unlocked state further requires: the number of reference points through which the touch signal passes during motion is the same as a preset reference number.

Optionally, the triggering to enter an unlocked state further requires that: the touch signal passes through all preset basis reference points during motion.

Optionally, the touch signal passing through all preset basis reference points during motion further includes: the touch signal passing through all preset basis reference points included in the at least one reference point during motion and the touch signal passing through the respective basis reference points an order in which is the same as an arrangement order of the preset basis reference points.

Optionally, the displaying at least two reference points on the screen includes: displaying the at least two reference points on the screen according to preset display locations of respective reference points.

Optionally, the displaying at least two reference points on the screen includes: displaying the at least two reference points on the screen and correspondingly displaying identity information of each reference point.

According to a second aspect of the disclosure, provided is a device configured to change from a locked state to an unlocked state, the device comprising; a detecting module (610) configured to detect a touch signal moving on a screen over a path having a start point and an end point; and a triggering module (620) configured to be triggered to enter an unlocked state, if a number of loops moved by the touch signal is the same as a preset reference number of loops. The detecting module is configured to detect a first moving direction of the touch signal. Triggering the triggering module to enter the unlocked state also requires that the first moving direction is the same as a preset reference direction and wherein the preset reference direction is clockwise or anticlockwise. The device is configured to determine whether the number of loops moved by the touch signal is the same as the preset reference number of loops by the process of detecting that a motion trace of the touch signal forms a first closed shape, increasing the recorded number of the closed shapes by one, removing the motion trace previously determined, and repeating the process for subsequent motion traces until the touch signal has ended.

Optionally the device further comprises a display module configured to display at least two reference points on the screen; the device is configured to determine whether the path of the touch signal passes through the reference points; wherein triggering the triggering module to enter the unlocked state further requires that: the touch signal passes through a certain number of the reference points; the touch signal meets a preset initial condition and/or a preset end condition, the initial condition being that an initial location of the touch signal is a location of a first one of the reference points, and the end condition being that a last reference point through which the touch signal passes is a second one of the reference points after the touch signal has moved the number of loops; and that the path of the touch signal passes through a further one of the reference points, different to either of the initial or last reference points, at an intermediate position along the path between the start and the end of the path.

Optionally, the number of reference points through which the touch signal must pass during motion is the same as a preset reference number.

The device may include: a processor; and a memory for storing instructions executable by the processor. The processor is configured to carry out the methods described herein.

According to the third aspect of the disclosure, a non-transitory readable storage medium is provided. The non-transitory readable storage medium comprises instructions executable by one or more processors in a terminal and for causing the one or more processors to carry out the methods described herein.

The disclosure may have the following advantages.

In the embodiments of the present disclosure, in a case that the touch signal moving on a screen in a first moving direction is detected, if the first moving direction is the same as the preset reference direction, which is clockwise or anticlockwise, and the number of loops moved by the touch signal and the preset reference number of loops are the same, a decryption state, such as an unlocked state, is triggered to enter. In this way, the slip trace for decryption is more complex, and the slip trace left on the screen is less likely to be cracked, so that the data security of the terminal can be improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which show embodiments of the disclosure and describe the principle of the disclosure together with the description, are incorporated into the description and are a part of the description.

Herein, the accompanying drawings intend to provide further understanding of the disclosure and are a part of the description, and are not intended to be limiting of the disclosure.
Fig. 1 is a flowchart showing a method for decryption according to an exemplary embodiment.
Figs. 2a-2d, 3a-3c, 4a-4f and 5a-5d are views respectively showing motion trace of a touch signal according to an exemplary embodiment.
Fig. 6 is a block diagram showing a device for decryption according to an exemplary embodiment.
Fig. 7 is a block diagram showing a terminal according to an exemplary embodiment.

The above drawings illustrate embodiments of the disclosure, which will be described in detail hereinafter. The drawings and description intend to illustrate the principle to the person skilled in the art by referring to specific embodiments, rather than to limit the scope of the disclosure in any manner.

### DETAILED DESCRIPTION

To make the objects, solutions and advantages of the disclosure clearer, reference will now be made in detail to exemplary embodiments, examples of which are illustrated in the accompanying drawings. The following exemplary embodiments and description thereof intend to illustrate, rather than to limit, the discourse.

The present disclosure provides a method for decryption and a device thereof, which will be described in detail with reference to the drawings.

### First embodiment

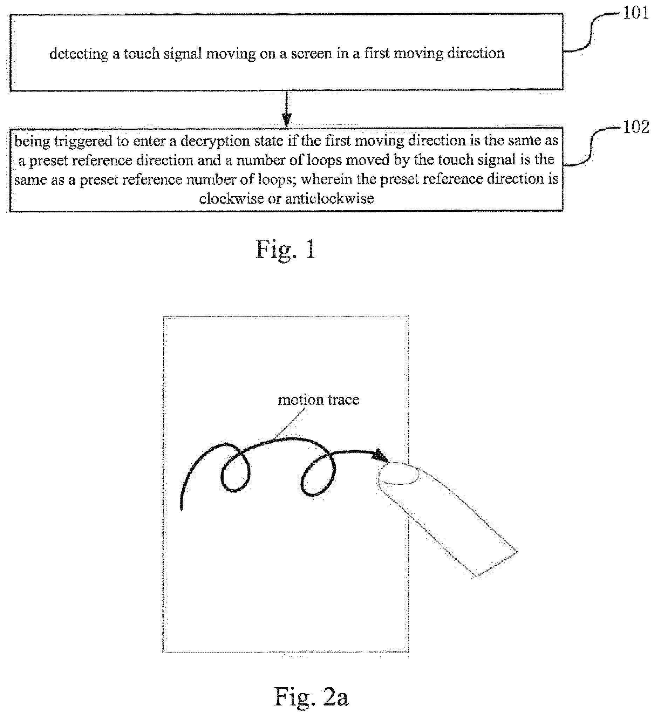

The present disclosure provides a method for decryption, which may include the following steps, as shown in Fig. 1.

In Step 101, a touch signal moving on a screen in a first moving direction is detected.

In Step 102, if the first moving direction is the same as a preset reference direction and the number of loops moved by the touch signal is the same as a preset reference number of loops, a decryption state is triggered to enter. The preset reference direction may be clockwise or anticlockwise.

In the present disclosure, in a case that the touch signal moving on a screen in a first moving direction is detected, if the first moving direction is the same as the preset reference direction which is clockwise or anticlockwise, and the number of loops moved by the touch signal and the preset reference number of loops are the same, a decryption state is triggered to enter. In this way, the slip trace for decryption is more complex, and the slip trace left on the screen is less likely to be cracked, so that the data security of the terminal can be improved.

### Second embodiment

The present disclosure provides a method for decryption which may be implemented by a terminal, for example a mobile terminal such as a mobile phone, a tablet computer or the like. In the embodiment, the solution is described in detail, taking an example that the method is implemented by a terminal through operations applied on a touch screen and the method is applied in an application scenario for unlocking the screen. Other solutions in which the method is implemented by other devices and is applied in other application scenarios are similar to the described solution, and their description will not be repeated herein.

Hereinafter, the processing flow as shown in Fig. 1 will be described in detail with reference to embodiments, the solution is as follows.

In step 101, a touch signal moving on a screen in a first moving direction is detected. The method according to the embodiment may be applied to a terminal.

The motion of the touch signal may be an arc motion or a polyline motion. The first moving direction may be clockwise or anticlockwise. The touch signal is an inductive signal generated when a finger or other object touches the screen of the terminal. Since a density of induction points on the screen is high, this touch signal may be constituted of signals from a plurality of induction points. A location of the touch signal may be a location range constituted of locations of respective inductive points, or a center point of the location range, such as a geometrical center, etc.

During implementation, taking the unlocking of the screen as an example, in a case that the terminal is in a sleep state, the terminal may trigger to display an interface of locking screen, and the user may slip the screen of the terminal in the clockwise direction or anticlockwise direction according to the preset decryption condition (or referred to as an unlock condition) by using a finger thereof or other object. At this time, the terminal detects the touch signal generated due to the touch applied from the finger to the screen, and the touch signal is moving in the clockwise direction or anticlockwise direction.

In step 102, if the first moving direction is the same as the preset reference direction and the number of loops moved by the touch signal is the same as a preset reference number of loops, a decryption state is triggered to enter. The method may be applied to a terminal.

The preset reference direction may be clockwise or anticlockwise. The reference direction and the reference number of loops may be preset through a system program or an application program of the terminal, or be set by a user. The decryption state may be a state after the decryption information is successfully verified. The decryption may be a touch signal or a password input by the user. The decryption state may also be a state after the lock screen is unlocked or an application is unlocked, or a state that a certain password transaction is successfully performed, etc.

During implementation, the terminal may determine whether respective decryption conditions are met or not when the touch signal has ended or during the duration of the touch signal. The decryption conditions may include: a first condition, i.e., the first moving direction is the same as the reference direction; a second condition, i.e., the number of loops moved by the touch signal is the same as the reference number of loops. If both of the conditions are met, the terminal may be triggered to enter the decryption state, for example, the terminal gets into the decryption state from the lock screen state. If one condition is not met, the terminal keeps the current state, i.e., the terminal is prevented from getting into the decryption state.

There are various manners for determining whether the number of loops moved by the touch signal is the same as the preset reference number of loops, and some feasible manners may be as follows.

A first manner: if the motion trace of the touch signal forms at least one closed shape, each of which is formed by a continuous trace, and the number of the formed closed shapes is the same as the reference number of loops, it is determined that the number of loops moved by the touch signal is the same as the reference number of loops.

The closed shapes may be any closed shapes with regular shape such as polygon, drop shape, circle or the like, or any closed shapes with irregular shape.

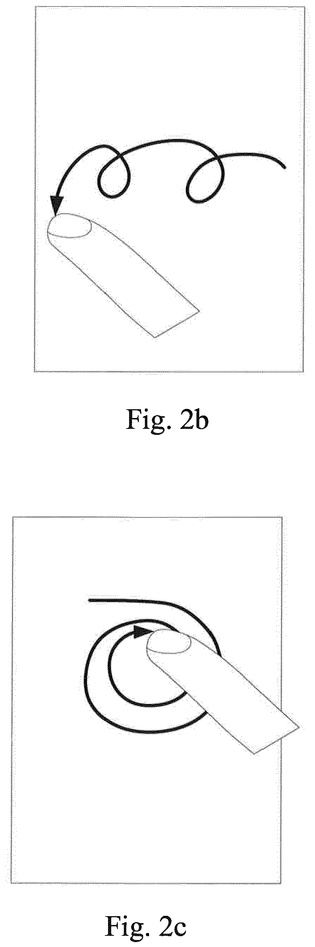

During implementation, the motion trace of the touch signal may be as shown in Fig. 2a (in a clockwise direction) or Fig. 2b (in an anticlockwise direction), the terminal may record the number of the closed shapes formed by the continuous trace without recording closed shapes formed by discontinuous trace. If the recorded number is the same as the reference number of loops, it is determined that the number of loops moved by the touch signal is the same as the reference number of loops. The recording process may be as follows. If it is detected that the motion trace of the touch signal forms one closed shape, the recorded number of the closed shapes is added to one, and the motion trace previously determined is removed, and the above detection process is repeated for the subsequent motion traces until the touch signal has ended. The resulting number of the closed shapes recorded can be obtained.

A second manner: if a cumulative value of angular variations during motion of the touch signal is in a preset reference angular range, it is determined that the number of loops moved by the touch signal is the same as the reference number of loops.

A lower limit of the preset reference angular range is a product of the reference number of loops and a circumferential angle, and an upper limit of the preset reference angular range is a product of a value by adding the reference number of loops to one and the circumferential angle, wherein the circumferential angle may be 360°. For example, if the reference number of loops is 2, the preset reference angular range may be 720° to 1080°.

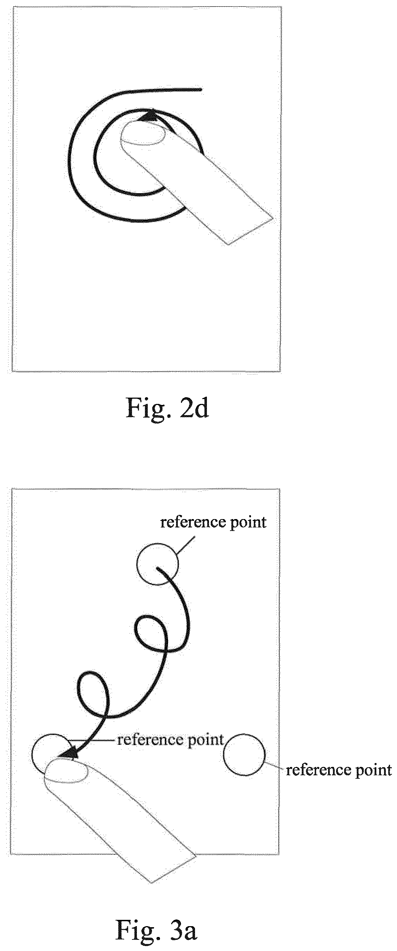

During implementation, the motion trace of the touch signal may be as shown in Figs. 2a, 2b, 2c or 2d (in an anticlockwise direction), the terminal may detect the moving direction of the touch signal in real time, so as to record the cumulative value of angular variations of the moving direction. Each 360° change in the moving direction illustrates that the touch signal moves one loop. When the touch signal has ended, the cumulative value of the recorded angular variations may be obtained. If the cumulative value of the recorded angular variation is in the above reference angular range, it may be determined that the number of loops moved by the touch signal is the same as the reference number of loops.

In the embodiments of the disclosure, in addition to the above two decryption conditions (the first and second decryption conditions), the decryption condition may also combine at least one reference point displayed on the screen and other decryption conditions may be added. Step 102 may be implemented in various process manners based on added different decryption conditions, and some feasible process manners are as follows.

### A first manner

If a first moving direction is the same as the preset reference direction, the number of loops moved by the touch signal is the same as the preset reference number of loops, and the number of reference points through which the touch signal passes during motion is the same as a preset reference number, the decryption state is triggered to enter.

The number of reference points and the location of each reference point may be set in advance or at random. The number of reference points is greater than or equal to the reference number. The reference number may be preset in the system program or the application program of the terminal, or may be set by a user.

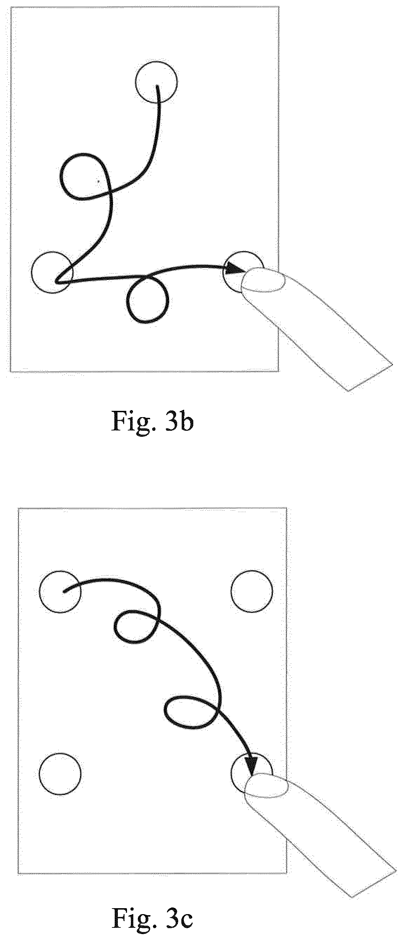

During implementation, when a user performs decryption operation through the slip operation, the finger is moved a certain number of loops in the first moving direction and the motion trace passes through a certain number of reference points, for example, any two points of three reference points. In the process, the motion trace of the touch signal may be as shown in Figs. 3a, 3b and 3c, wherein Fig. 3a shows that the motion trace passes through two points of three reference points, Fig. 3b shows that the motion trace passes all of three reference points, and Fig. 3c shows that the motion trace passes two points of four reference points.

Alternatively, an initial point and/or an end point of the slip trace may be set in the above at least one reference point, i.e., a first reference point and/or a second reference point may be included in the above at least one reference point, the first reference point may be the start point and the second reference point may be the end point. Correspondingly, the decryption condition may add an initial condition and/or a preset end condition, and the first manner may be as follows.

If the first moving direction is the same as the preset reference direction, the number of loops moved by the touch signal is the same as the preset reference number of loops, the number of reference points through which the touch signal during motion is the same as a preset reference number, and the touch signal meets the preset initial condition and/or the preset end condition, the decryption state is triggered to enter.

The initial condition is such a condition that an initial location of the touch signal is a location of the first reference point; and the end condition is such a condition that a last reference point through which the touch signal passes is the second reference point after the touch signal has moved the number of loops. The initial location of the touch signal is the location at which the touch signal is generated initially.

During implementations, the process may have the following situations.

A first situation: the start point is set in the reference points and the initial condition is added to the decryption condition.

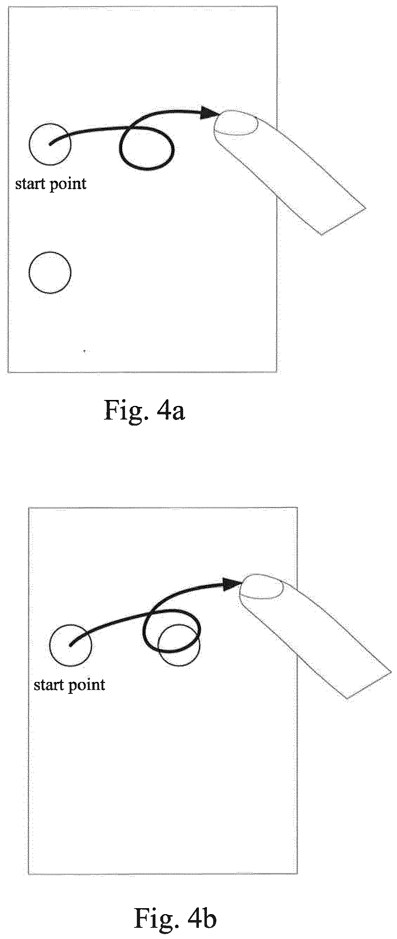

During implementation, the first reference point may be displayed with a specific mark for marking the first reference point as the start point of slip. For example, a word "start" or specific colors such as red may be displayed. When a user performs decryption through the slip operation, the finger is applied on the first reference point firstly and then is moved a certain number of loops in the first moving direction while the motion trace passes through a creation number of reference points. In this process, the motion trace of the touch signal may be as shown in Figs. 4a and 4b, wherein Fig. 4a shows a case that the motion trace passes through one of two reference points and the one reference point is the start point, and Fig. 4b shows a case that the motion trace passes through both of two reference points and one of them is the start point.

A second situation: the end point is set in the reference points and the end condition is added to the decryption condition.

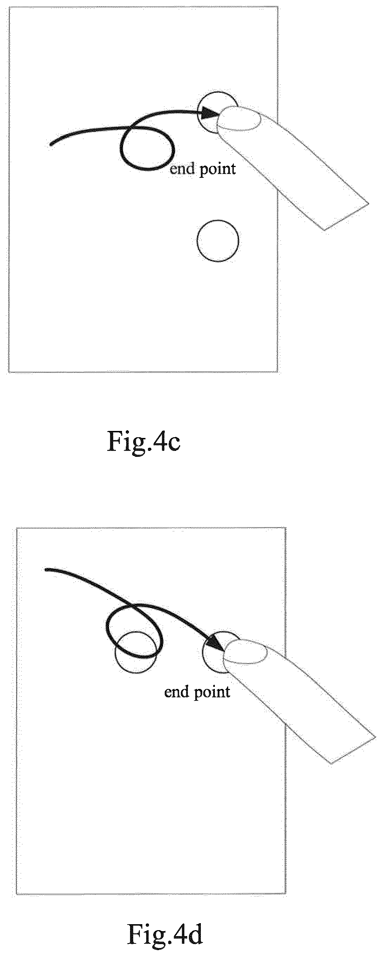

During implementation, the second reference point may be displayed with a specific mark for marking the second reference point as the end point of slip. For example, a word "end" or specific colors such as blue may be displayed. When a user performs decryption through the slip operation, the finger is moved a certain number of loops in the first moving direction and the motion trace passes through a creation number of reference points, and the finger finally slips on the second reference point after being moved the certain number of loops. In this process, the motion trace of the touch signal may be as shown in Figs. 4c and 4d, wherein Fig. 4c shows a case that the motion trace passes through one of two reference points and one of the reference points is the end point, and Fig. 4d shows a case that the motion trace passes through both of two reference points and one of them is the end point.

A third situation: the start point and the end point are set in the reference points, and the initial condition and the end condition are added to the decryption condition.

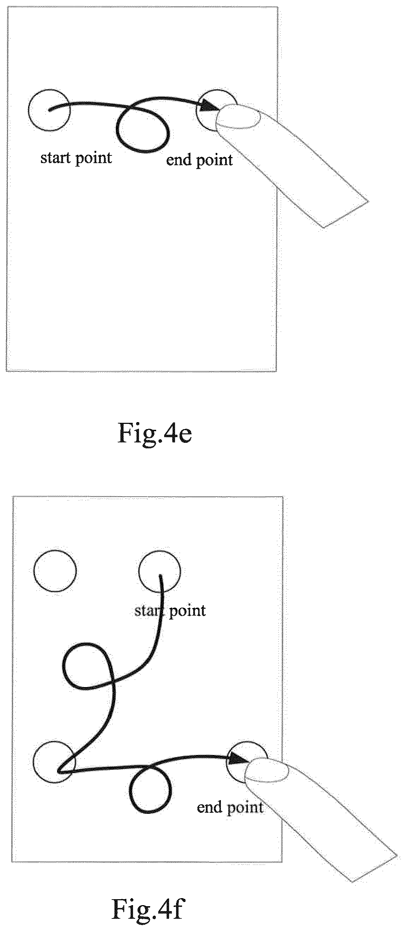

During implementation, the first and second reference points may be displayed with specific marks for respectively marking the first and second reference points as the start point and the end point of slip. For example, words "start" and "end" or specific colors may be displayed, for example the first reference point is displayed as a red point and the second reference point is displayed as a blue point. When the user performs decryption through the slip operation, the finger is applied firstly on the first reference point, and then is moved a certain number of loops in the first moving direction while the motion trace passes through a creation number of reference points, and the finger finally slips on the second reference point after being moved the certain number of loops. In this process, the motion trace of the touch signal may be as shown in Figs. 4e and 4f, wherein Fig. 4e shows a case that the motion trace passes through both of two reference points and both of the reference points are respectively the start point and the end point, and Fig. 4f shows a case that the motion trace passes through three of four reference points and three of the reference points include the start point and the end point.

### A second manner

If the first moving direction is the same as the preset reference direction, the number of loops moved by the touch signal is the same as the preset reference number of loops, and the touch signal passes through all preset basis reference points included in at least one displayed reference point during motion, the decryption state is triggered to enter.

The basis reference point is a reference point through which the touch signal is required to pass in the decryption condition, and may be preset in the system program or the application program of the terminal, or may be set by a user.

During implementation, as for the second manner, there may be various methods for displaying at least one reference point on the screen, some of which will be described hereinafter.

A first display method is that at least one reference point is displayed on the screen according to display locations of each of the preset reference points.

In this display method, the location of each of the reference points may be fixed. For example, nine reference points are evenly divided into three rows and each row has three points, or all of the reference points form a circle, etc.

A second display method is that at least one reference point is displayed on the screen and identity information of each of the reference points is displayed correspondingly.

The identity information of the reference point may be information, such as serial number, color and the like, for differentiating the reference point from other reference points.

In this display method, the location of each reference point may be fixed or random.

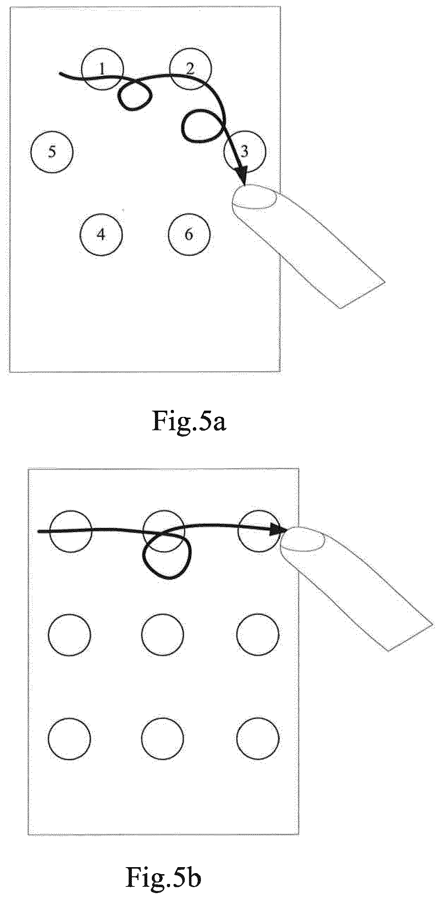

Based on the above displayed reference points, when the user performs decryption through the slip operation, the finger is moved a certain number of loops in the first moving direction and the motion trace passes through all of the basis reference points included in the displayed reference points. For example, as shown in Fig. 5a, six reference points, i.e., points 1, 2, 3, 4, 5 and 6 are displayed on the screen, wherein the points 1, 2 and 3 are basis reference points, and the motion trace should pass through the three reference points 1, 2 and 3. For example, as shown in Fig. 5b, nine reference points, which are displayed as three rows and each row has three points, are displayed on the screen, wherein three reference points in an upper row are basis reference points, the motion trace should pass through the three reference points. In this process, the order in which the motion trace passes through the respective basis reference points may not be limited.

Alternatively, the order in which the motion trace passes through respective reference points may be limited. Correspondingly, the added decryption condition in the second manner, i.e., in which the touch signal passes through all preset basis reference points in at least one displayed reference point during motion, may be as follows: the touch signal passes through all preset basis reference points in at least one displayed reference point during motion and the order in which the touch signal passes through respective basis reference points is the same as an arrangement order of the preset basis reference points.

The arrangement order of the basis reference points may be preset in the system program or the application program in the terminal, or may be set by a user.

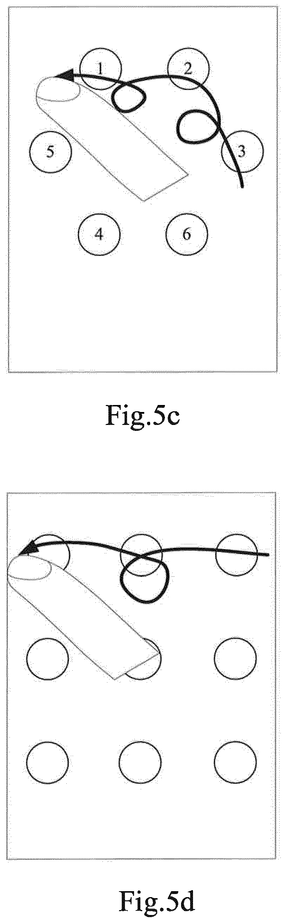

During implementation, when the user performs decryption operation through the slip operation, the finger is moved a certain number of loops in the first moving direction and the motion trace passes through all of basis reference points included in the displayed reference points in a certain order. For example, as shown in Fig. 5c, six reference points, i.e., points 1, 2, 3, 4, 5 and 6 are displayed on the screen of which points 1, 2 and 3 are basis reference points and the arrangement order of the basis reference points is 3, 2, 1, the motion trace should pass through the three reference points in order of 3, 2, 1. For example, as shown in Fig. 5d in which there are nine reference points displayed on the screen which are displayed as three rows and each row has three points, if three of the reference points in the upper row are basis reference points and the basis reference points are arranged in the order from right to left, the motion trace should pass through the three reference points in the order from right to left.

Alternatively, the start point and/or the end point of slip may be set in the above at least one reference point, i.e., the above at least one reference points may include the first reference point and/or the second reference point, wherein the first reference point may be the start point and the second reference point may be the end point. Correspondingly, the initial condition and/or the end condition may be added into the decryption condition, and the second manner may be as follows.

If the first moving direction is the same as the preset reference direction, the number of loops moved by the touch signal is the same as the preset reference number of loops, the motion trace passes through all of the basis reference points included in the displayed at least one reference point during motion, and the touch signal meets the preset initial condition and/or the end condition, then the decryption state is triggered to enter.

The initial condition is such a condition that the start location of the touch signal is at the location of the first reference point; and the end condition is such a condition that a last reference point through which the touch signal passes is the second reference point after the touch signal has moved the number of loops.

During implementation, the process may include various situations and corresponding processes may be similar to the above one to three situations and may refer to the above description correspondingly, and thus the description thereof will not be repeated.

The embodiments of the disclosure also provide a method for setting the above basis parameters which at least include a basis direction and a basis number of loops and may also include a basis number, a basis reference point, a basis reference point arrangement order, a basis angle range and the like. A corresponding setting process may be as follows: a parameter setting instruction, which carries a target value of a basis reference parameter to be set, is received; and the corresponding target value is set as a value of the basis reference parameter to be set.

The value of the basis reference parameter to be set may include one or more of the following reference parameters: a basis direction, a basis number of loops, a basis number, basis reference points, an arrangement order of basis reference points, a basis angle range and the like.

During implementations, an encryption setting page may be set in the system program or the application program for setting the above basis parameters. The page may be provided with setting items of respective basis parameters. The setting item of the basis parameter may include an on-off button of the basis parameter. The basis direction and the basis number of loops may be enabled by default. The setting item may also include a setting column of the basis parameter which may be set in various user setting manners such as selecting from a pull-down menu, manually inputting values, simulation of slip operation and the like. In addition, the setting item may also include a button for restoring the defaults.

In embodiments of the disclosure, when the touch signal moving on the screen in the first direction is detected, if the first moving direction is the same as the preset reference direction which may be clockwise or anticlockwise, and the number of loops moved by the touch signal is the same as the preset reference number of loops, the terminal is triggered to enter the decryption state. In this way, the slip trace for decryption is more complex, so that the slip trace left on the screen is not likely to be cracked, and thus the data security of the terminal is improved.

### Third embodiment

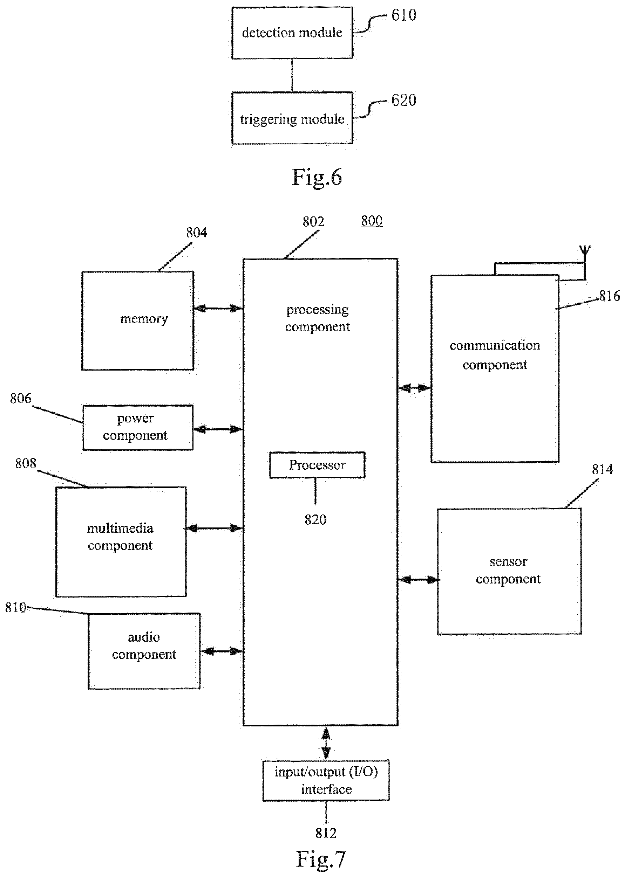

Based on the same technology concepts, the disclosure also provides a device for decryption, as shown in Fig.6, the device include the following modules: a detecting module 610 configured to detect a touch signal moving on a screen in a first moving direction; and a triggering module 620 configured to be triggered to enter a decryption state if the first moving direction is the same as a preset reference direction and a number of loops moved by the touch signal is the same as a preset reference number of loops. The preset reference direction may be clockwise or anticlockwise.

Optionally, the device also includes a display module configured to display at least one reference point on the screen.

The triggering module 620 is configured to be triggered to enter a decryption state, if the first moving direction is the same as the preset reference direction, the number of loops moved by the touch signal is the same as the preset reference number of loops, and the number of reference points through which the touch signal passes during motion is the same as a preset reference number.

Optionally, the at least one reference point may include a first reference point and/or a second reference point.

The triggering module 620 is configured to be triggered to enter a decryption state, if the first moving direction is the same as the preset reference direction, the number of loops moved by the touch signal is the same as the preset reference number of loops, the number of reference points through which the touch signal passes during motion is the same as a preset reference number, and the touch signal meets a preset initial condition and/or a preset end condition.

The initial condition is such a condition that an initial location of the touch signal is a location of the first reference point; and an end condition is such a condition that a last reference point through which the touch signal passes is the second reference point after the touch signal has moved the number of loops.

Optionally, the device also includes a display module configured to display at least one reference point on the screen.

The triggering module 620 is configured to be triggered to enter a decryption state, if the first moving direction is the same as the preset reference direction, the number of loops moved by the touch signal is the same as the preset reference number of loops, and the touch signal passes through all preset basis reference points in at least one reference point during motion.

Optionally, the touch signal passing through all preset basis reference points in at least one reference point during motion may include: the touch signal passes through all preset basis reference points in at least one reference point during motion and an order in which the touch signal passes through the respective basis reference points is the same as an arrangement order of the preset basis reference points

Optionally, the display module is configured to display at least one reference point on the screen according to a location of each of preset reference points.

Optionally, the display module is configured to display at least one reference point on the screen and correspondingly display identity information of each reference point.

Optionally, the at least one reference point may include a first reference point and a second reference point.

The triggering module 620 is configured to be triggered to enter a decryption state, if the first moving direction is the same as the preset reference direction, the number of loops moved by the touch signal is the same as the preset reference number of loops, the touch signal passes through all preset basis reference points in at least one reference point during motion, and the touch signal meets the preset initial condition and/or the end condition.

The initial condition is such a condition that the start location of the touch signal is at the location of the first reference point; and the end condition is such a condition that a last reference point through which the touch signal passes is the second reference point after the touch signal has moved the number of loops.

Optionally, the number of loops moved by the touch signal being the same as the preset reference number of loops may include: the motion trace of the touch signal forms at least one closed shape, each of which is formed by a continuous trace, and the number of the formed closed shapes is the same as the reference number of loops.

Optionally, the number of loops moved by the touch signal being the same as the preset reference number of loops may include: a cumulative value of angular variations during motion of the touch signal is in a preset reference angular range, a lower limit of which is a product of the reference number of loops and a circumferential angle, and an upper limit of which is a product of a value by adding the reference number of loops to one and the circumferential angle.

In embodiments of the disclosure, when the touch signal moving on the screen in the first direction is detected, if the first moving direction is the same as the preset reference direction which may be clockwise or anticlockwise, and the number of loops moved by the touch signal is the same as the preset reference number of loops, the terminal is triggered to enter the decryption state. In this way, the slip trace for decryption is more complex, so that the slip trace left on the screen is not likely to be identified, and thus the data security of the terminal is improved.

### Fourth embodiment

Fig. 7 is a block diagram of a terminal 800 according to an exemplary embodiment. For example, the terminal 800 may be a computer, a digital broadcasting terminal, a messaging device, a game console, a tablet device, a medical device, an excise equipment, a personal digital assistant, etc.

Referring to Fig. 7, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, an initialing button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium may be provided. When the instructions stored in the storage medium are executed by the processor of the mobile terminal, the instructions enables the mobile terminal to perform a method for obtaining cross-domain data, including the follows steps of: detecting a touch signal moving in a first moving direction on a screen; being triggered to enter the decryption state if the first moving direction is the same as a preset reference direction and a number of loops moved by the touch signal is the same as a preset reference number of loops, wherein the preset reference direction may be clockwise or anticlockwise.

Optionally, the method may also include: displaying at least one reference point on the screen.

The being triggered to enter the decryption state if the first moving direction is the same as a preset reference direction and a number of loops moved by the touch signal is the same as a preset reference number of loops, may include: being triggered to enter the decryption state if a first moving direction is the same as the preset reference direction, the number of loops moved by the touch signal is the same as the preset reference number of loops, and the number of reference points through which the touch signal passes during motion is the same as a preset reference number.

Optionally, the at least one reference point may include a first reference point and/or a second reference point.

The being triggered to enter the decryption state if a first moving direction is the same as the preset reference direction, the number of loops moved by the touch signal is the same as the preset reference number of loops, and the number of reference points through which the touch signal during motion is the same as a preset reference number, may include: being triggered to enter the decryption state if the first moving direction is the same as the preset reference direction, the number of loops moved by the touch signal is the same as the preset reference number of loops, the number of reference points through which the touch signal during motion passes is the same as the preset reference number, and the touch signal meets a preset initial condition and/or a preset end condition.

The initial condition is such a condition that the start location of the touch signal is at the location of the first reference point; and the end condition is such a condition that a last reference point through which the touch signal passes is a second reference point after the touch signal has moved the number of loops.

Optionally, the method may also include: displaying at least one reference point on the screen.

The being triggered to enter the decryption state if the first moving direction is the same as the preset reference direction and the number of loops moved by the touch signal is the same as a preset reference number of loops, may include: being triggered to enter the decryption state if the first moving direction is the same as the preset reference direction, the number of loops moved by the touch signal is the same as the preset reference number of loops, and the touch signal passes through all preset basis reference points in at least one reference point during motion.

Optionally, the touch signal passing through all preset basis reference points in at least one reference point during motion may include: the touch signal passes through all preset basis reference points in the at least one reference point during motion and an order in which the touch signal passes through the respective basis reference points is the same as an arrangement order of the preset basis reference points.

The at least one reference point being displayed on the screen may include: at least one reference point is displayed on the screen according to preset display locations of respective reference points.

Optionally, the at least one reference point being displayed on the screen may include: at least one reference point is displayed on the screen and identity information of each reference point is displayed correspondingly.

Optionally, the at least one reference point may include a first reference point and/or a second reference point.

The being triggered to enter the decryption state if the first moving direction is the same as the preset reference direction, the number of loops moved by the touch signal is the same as the preset reference number of loops, and the touch signal passes through preset basis reference points in at least one reference point during motion, may include: being triggered to enter the decryption state if the first moving direction is the same as the preset reference direction, the number of loops moved by the touch signal is the same as the preset reference number of loops, the touch signal passes through all of basis reference points included in the at least one reference point during motion and meets the preset initial condition and/or the end condition.

The initial condition is such a condition that the start location of the touch signal is at the location of the first reference point; and the end condition is such a condition that the last reference point through which the touch signal passes is the second reference point after the touch signal has moved the number of loops.

Optionally, the number of loops moved by the touch signal being the same as the preset reference number of loops may include: the motion trace of the touch signal forms at least one closed shape, each of which is formed by a continuous trace, and the number of the formed closed shapes is the same as a reference number of loops.

Optionally, the number of loops moved by the touch signal being the same as the preset reference number of loops may include: a cumulative value of angular variations during motion of the touch signal is in a preset reference angular range, a lower limit of which is a product of the reference number of loops and a circumferential angle, and an upper limit of which is a product of a value by adding the reference number of loops to one and the circumferential angle.

In embodiments of the disclosure, when the touch signal moving on the screen in the first direction is detected, if the first moving direction is the same as the preset reference direction which may be clockwise or anticlockwise, and the number of loops moved by the touch signal is the same as the preset reference number of loops, the decryption state is triggered to enter. In this way, the slip trace for decryption is more complex, so that the slip trace left on the screen is not likely to be identified, and thus the data security of the terminal is improved.

It will be appreciated that the above embodiments are exemplary and the disclosure is not limited thereto, and that various modifications and changes can be made without departing from the scope thereof. It is intended that the scope of the invention only be limited by the appended claims.

## Claims

1. A method for unlocking a device, the method comprising:
detecting (101) a touch signal moving on a screen over a path having a start point and an end point; and
being triggered to enter an unlocked state (102) if the number of loops moved by the touch signal is the same as a preset reference number of loops;
**characterised in that**:
detecting the touch signal includes detecting a first moving direction of the touch signal;
triggering the unlocked state also requires that the first moving direction is the same as a preset reference direction and wherein the preset reference direction is clockwise or anticlockwise;
and further **characterised in that** the method further comprises:
determining whether the number of loops moved by the touch signal is the same as the preset reference number of loops by the process of detecting that a motion trace of the touch signal forms a first closed shape, increasing the recorded number of the closed shapes by one, removing the motion trace previously determined, and repeating the process for subsequent motion traces until the touch signal has ended

2. The method according to claim 1 further comprising:
displaying at least two reference points on the screen;
determining whether the path of the touch signal passes through the reference points;
wherein triggering the unlocked state further requires that:
the touch signal passes through a certain number of the reference points;
the touch signal meets a preset initial condition and/or a preset end condition, the initial condition being that an initial location of the touch signal is a location of a first one of the reference points, and the end condition being that a last reference point through which the touch signal passes is a second one of the reference points after the touch signal has moved the number of loops; and that
the path of the touch signal passes through a further one of the reference points, different to either of the initial or last reference points, at an intermediate position along the path between the start and the end of the path.

3. The method according to claim 2,
the being triggered to enter the unlocked state further requiring that:
the number of reference points through which the touch signal passes during motion is the same as a preset reference number.

4. The method according to claim 2,
the being triggered to enter an unlocked state further requiring that:
the touch signal passes through all preset reference points during motion.

5. The method according to claim 4, **characterized in that** the touch signal passing through all preset reference points during motion comprises:
the touch signal passes through all preset basis reference points included in the at least one reference point during motion and an order in which the touch signal passes through the respective basis reference points is the same as an arrangement order of the preset basis reference points.

6. The method according to claim 4 or 5, **characterized in that** the displaying at least two reference point on the screen comprises:
displaying the at least two reference points on the screen according to preset display locations of the respective reference points.

7. The method according to claim 4, 5 or 6, **characterized in that** the displaying at least two reference points on the screen comprises:
displaying the at least two reference points on the screen and correspondingly displaying identity information of each reference point.

8. A device configured to change from a locked state to an unlocked state, the device comprising;
a detecting module (610) configured to detect a touch signal moving on a screen over a path having a start point and an end point; and
a triggering module (620) configured to be triggered to enter an unlocked state, if a number of loops moved by the touch signal is the same as a preset reference number of loops;
**characterised in that**
the detecting module is configured to detect a first moving direction of the touch signal;
triggering the triggering module to enter the unlocked state also requires that the first moving direction is the same as a preset reference direction and wherein the preset reference direction is clockwise or anticlockwise; and **in that**:
the device is configured to determine whether the number of loops moved by the touch signal is the same as the preset reference number of loops by the process of detecting that a motion trace of the touch signal forms a first closed shape, increasing the recorded number of the closed shapes by one, removing the motion trace previously determined, and repeating the process for subsequent motion traces until the touch signal has ended.

9. The device according to claim 8, wherein the device further comprises a display module configured to display at least two reference points on the screen;
the device is configured to determine whether the path of the touch signal passes through the reference points;
wherein triggering the triggering module to enter the unlocked state further requires that:
the touch signal passes through a certain number of the reference points;
the touch signal meets a preset initial condition and/or a preset end condition, the initial condition being that an initial location of the touch signal is a location of a first one of the reference points, and the end condition being that a last reference point through which the touch signal passes is a second one of the reference points after the touch signal has moved the number of loops; and that
the path of the touch signal passes through a further one of the reference points, different to either of the initial or last reference points, at an intermediate position along the path between the start and the end of the path,

10. The device according to claim 9, wherein the number of reference points through which the touch signal must pass during motion is the same as a preset reference number.

11. A device according to claim 8 comprising:
a processor (802); and
a memory (804) for storing instructions executable by the processor;
wherein the processor is configured to:
carry out the method of claim 1.

12. A non-transitory readable storage medium comprising instructions executable by one or more processors in a terminal that when executed cause the one or more processors to carry out the method of any of claims 1 to 7.

## Patentansprüche

1. Verfahren zum Entsperren einer Vorrichtung, wobei das Verfahren Folgendes aufweist:
Erkennen (101) eines Berührungssignals, das sich auf einem Bildschirm auf einem Weg bewegt, der einen Anfangspunkt und einen Endpunkt hat; und
Ausgelöstwerden zum Eintreten in einen entsperrten Zustand (102), wenn die Zahl der Schleifen, durch die sich das Berührungssignal bewegt, die gleiche wie eine voreingestellte Referenzzahl von Schleifen ist;
**dadurch gekennzeichnet, dass**:
Erkennen des Berührungssignals das Erkennen einer ersten Bewegungsrichtung des Berührungssignals beinhaltet;
Auslösen des entsperrten Zustands auch erfordert, dass die erste Bewegungsrichtung die gleiche wie eine voreingestellte Referenzrichtung ist, und wobei die voreingestellte Referenzrichtung im Uhrzeigersinn oder gegen den Uhrzeigersinn ist;
und ferner **dadurch gekennzeichnet, dass** das Verfahren ferner Folgendes aufweist;
Bestimmen, ob die Zahl der Schleifen, durch die sich das Berührungssignal bewegt, die gleiche wie die voreingestellte Referenzzahl von Schleifen ist, durch den Prozess des Erkennens, dass eine Bewegungsspur des Berührungssignals eine erste geschlossene Form bildet, Erhöhen der aufgezeichneten Zahl der geschlossenen Formen um eins, Entfernen der zuvor bestimmten Bewegungsspur und Wiederholen des Prozesses für nachfolgende Bewegungsspuren, bis das Berührungssignal beendet ist.

2. Verfahren nach Anspruch 1, das ferner Folgendes aufweist:
Anzeigen von wenigstens zwei Referenzpunkten auf dem Bildschirm;
Bestimmen, ob der Weg des Berührungssignals durch die Referenzpunkte verläuft;
wobei das Auslösen des entsperrten Status ferner erfordert, dass:
das Berührungssignal durch eine gewisse Zahl der Referenzpunkte verläuft;
das Berührungssignal eine voreingestellte Anfangsbedingung und/oder eine voreingestellte Endbedingung erfüllt, wobei die Anfangsbedingung die ist, dass ein Anfangsort des Berührungssignals ein Ort eines ersten der Referenzpunkte ist, und die Endbedingung die ist, dass ein letzter Referenzpunkt, durch den das Berührungssignal verläuft, ein zweiter der Referenzpunkte ist, nachdem das Berührungssignal sich durch die Zahl von Schleifen bewegt hat; und dass
der Weg des Berührungssignals durch einen weiteren der Referenzpunkte, die von entweder dem Anfangs- oder dem letzten Referenzpunkt verschieden sind, an einer Zwischenposition an dem Weg entlang zwischen dem Anfang und dem Ende des Wegs verläuft.

3. Verfahren nach Anspruch 2,
wobei das Ausgelöstwerden zum Eintreten in einen entsperrten Zustand ferner erfordert, dass:
die Zahl von Referenzpunkten, durch welche das Berührungssignal während der Bewegung verläuft, die gleiche wie eine voreingestellte Referenzzahl ist.

4. Verfahren nach Anspruch 2,
wobei das Ausgelöstwerden zum Eintreten in einen entsperrten Zustand ferner erfordert, dass:
das Berührungssignal während der Bewegung durch alle voreingestellten Referenzpunkte verläuft.

5. Verfahren nach Anspruch 4, **dadurch gekennzeichnet, dass** das während der Bewegung durch alle voreingestellten Referenzpunkte verlaufende Berührungssignal Folgendes aufweist:
das Berührungssignal verläuft während der Bewegung durch alle voreingestellten Referenzpunkte, die in dem wenigstens einen Referenzpunkt eingeschlossen sind, und eine Reihenfolge, in der das Berührungssignal durch die jeweiligen Basisreferenzpunkte verläuft, ist die gleiche wie eine Anordnungsreihenfolge der voreingestellten Basisreferenzpunkte.

6. Verfahren nach Anspruch 4 oder 5, **dadurch gekennzeichnet, dass** das Anzeigen von wenigstens zwei Referenzpunkten auf dem Bildschirm Folgendes aufweist:
Anzeigen der wenigstens zwei Referenzpunkte auf dem Bildschirm gemäß voreingestellten Anzeigeorten der jeweiligen Referenzpunkte.

7. Verfahren nach Anspruch 4, 5 oder 6, **dadurch gekennzeichnet, dass** das Anzeigen von wenigstens zwei Referenzpunkten auf dem Bildschirm Folgendes aufweist:
Anzeigen der wenigstens zwei Referenzpunkte auf dem Bildschirm und entsprechendes Anzeigen von Identitätsinformationen jedes Referenzpunkts.

8. Vorrichtung, die zum Wechseln von einem gesperrten Zustand in einen entsperrten Zustand konfiguriert ist, wobei die Vorrichtung Folgendes aufweist:
ein Erkennungsmodul (610), das zum Erkennen eines Berührungssignals konfiguriert ist, das sich auf einem Bildschirm auf einem Weg bewegt, der einen Anfangspunkt und einen Endpunkt hat; und
ein Auslösemodul (620), das zum Ausgelöstwerden zum Eintreten in einen entsperrten Zustand, wenn eine Zahl von Schleifen, durch die sich das Berührungssignal bewegt, die gleiche wie eine voreingestellte Referenzzahl von Schleifen ist, konfiguriert ist;
**dadurch gekennzeichnet, dass**
das Erkennungsmodul (610) zum Erkennen einer ersten Bewegungsrichtung des Berührungssignals konfiguriert ist;
das Auslösen des Auslösemoduls zum Eintreten in den entsperrten Zustand auch erfordert, dass die erste Bewegungsrichtung die gleiche wie eine voreingestellte Referenzrichtung ist, und wobei die voreingestellte Referenzrichtung im Uhrzeigersinn oder entgegen dem Uhrzeigersinn ist; und dadurch, dass:
die Vorrichtung konfiguriert ist zum Bestimmen, ob die Zahl von Schleifen, durch die sich das Berührungssignal bewegt, die gleiche wie die voreingestellte Referenzzahl von Schleifen ist, durch den Prozess des Erkennens, dass eine Bewegungsspur des Berührungssignals eine erste geschlossene Form bildet, Erhöhen der aufgezeichneten Zahl der geschlossenen Formen um eins, Entfernen der zuvor bestimmten Bewegungsspur und Wiederholen des Prozesses für nachfolgende Bewegungsspuren, bis das Berührungssignal beendet ist.

9. Vorrichtung nach Anspruch 8, wobei die Vorrichtung ferner ein Anzeigemodul aufweist, das zum Anzeigen von wenigstens zwei Referenzpunkten auf dem Bildschirm konfiguriert ist;
die Vorrichtung konfiguriert ist, um zu bestimmen, ob der Weg des Berührungssignals durch die Referenzpunkte verläuft;
wobei das Auslösen des Auslösemoduls zum Eintreten in den entsperrten Status ferner erfordert, dass:
das Berührungssignal durch eine gewisse Zahl der Referenzpunkte verläuft;
das Berührungssignal eine voreingestellte Anfangsbedingung und/oder eine voreingestellte Endbedingung erfüllt, wobei die Anfangsbedingung die ist, dass ein Anfangsort des Berührungssignals ein Ort eines ersten der Referenzpunkte ist, und die Endbedingung die ist, dass ein letzter Referenzpunkt, durch den das Berührungssignal verläuft, ein zweiter der Referenzpunkte ist, nachdem das Berührungssignal sich durch die Zahl von Schleifen bewegt hat; und dass
der Weg des Berührungssignals durch einen weiteren der Referenzpunkte, die von entweder dem Anfangs- oder dem letzten Referenzpunkt verschieden sind, an einer Zwischenposition an dem Weg entlang zwischen dem Anfang und dem Ende des Wegs verläuft.

10. Vorrichtung nach Anspruch 9, wobei die Zahl von Referenzpunkten, durch die das Berührungssignal während der Bewegung verlaufen muss, die gleiche wie eine voreingestellte Referenzzahl ist.

11. Vorrichtung nach Anspruch 8, die Folgendes aufweist:
einen Prozessor (802) und
einen Speicher (804) zum Speichern von durch den Prozessor ausführbaren Anweisungen;
wobei der Prozessor konfiguriert ist zum:
Durchführen des Verfahrens nach Anspruch 1.

12. Nichtflüchtiges lesbares Speichermedium, das durch einen Prozessor oder mehr Prozessoren in einem Endgerät ausführbare Anweisungen aufweist, die bei Ausführung veranlassen, dass der eine oder die mehr Prozessor(en) das Verfahren nach einem der Ansprüche 1 bis 7 durchführt bzw. durchführen.

## Revendications

1. Procédé destiné au déverrouillage d'un dispositif, le procédé comprenant :
détecter (101) un signal tactile se déplaçant sur un écran sur un parcours ayant un point de départ et un point final, et
étant détecté pour entrer un état déverrouillé (102) si le nombre de boucles déplacées par le signal tactile est le même qu'un nombre de référence préréglé de boucles ;
**caractérisé en ce que** :
détecter le signal tactile comprend détecter une première direction de déplacement du signal tactile ;
déclencher l'état déverrouillé exige aussi que la première direction de déplacement soit la même qu'une direction de référence préréglée et dans lequel la direction de référence préréglée est de gauche à droite ou de droite à gauche ;
et **caractérisé en outre en ce que** le procédé comprend en outre :
déterminer si le nombre de boucles déplacées par le signal tactile est le même que le nombre de référence préréglé de boucles par le procédé de détection qu'une trace de déplacement du signal tactile forme une première forme fermée, augmentant le nombre enregistré de formes fermées de un, retirer la trace de déplacement déterminée précédemment, et répéter le procédé pour des traces de déplacement subséquentes jusqu'à ce que le signal tactile soit terminé.

2. Procédé selon la revendication 1, comprenant en outre :
afficher au moins deux points de référence sur l'écran ;
déterminer si le parcours du signal tactile passe à travers les points de référence ;
dans lequel déclencher l'état déverrouillé exige en outre que :
le signal tactile passe à travers un certain nombre de points de référence ;
le signal tactile réponde à une condition initiale prédéterminée et/ou une condition finale prédéterminée, la condition initiale étant qu'un emplacement initial du signal tactile soit un emplacement d'un premier des points de référence, et la condition finale étant qu'un dernier point de référence à travers lequel le signal tactile passe soit un deuxième des points de référence après que le signal tactile s'est déplacé du nombre de boucles ; et que
le parcours du signal tactile passe à travers un point supplémentaire des points de référence, différent du point de référence initial ou du dernier point de référence, à une position intermédiaire le long du parcours entre le début et la fin du parcours.

3. Procédé selon la revendication 2,
le fait d'être déclenché pour entrer l'état déverrouillé exige en outre que :
le nombre de points de référence à travers lesquels le signal tactile passe durant le déplacement est le même qu'un nombre de référence préréglé.

4. Procédé selon la revendication 2,
le fait d'être déclenché pour entrer un état déverrouillé exige en outre que :
le signal tactile passe à travers tous les points de référence préréglés durant le déplacement.

5. Procédé selon la revendication 4, **caractérisé en ce que** le signal tactile passant à travers tous les points de référence préréglés durant le déplacement comprend que :
le signal tactile passe à travers tous les points de référence de base préréglés inclus dans le au moins un point de référence durant le déplacement et un ordre dans lequel le signal tactile passe à travers les points de référence de base préréglés soit le même qu'un ordre d'arrangement des points de référence de base préréglés.

6. Procédé selon la revendication 4 ou 5, **caractérisé en ce que** l'affichage d'au moins deux points de référence sur l'écran comprend :
afficher les au moins deux points de référence sur l'écran conformément à des emplacements d'affichage préréglés des points de référence respectifs.

7. Procédé selon la revendication 4, 5 ou 6, **caractérisé en ce que** l'affichage d'au moins deux points de référence sur l'écran comprend :
afficher les au moins deux points de référence sur l'écran et afficher d'une manière correspondante des informations d'identité de chaque point de référence.

8. Dispositif configuré pour changer d'un état verrouillé à un état déverrouillé, le dispositif comprenant :
un module de détection (610) configuré pour détecter un signal tactile se déplaçant sur un écran sur un parcours ayant un point de départ et un point final ; et
un module de déclenchement (620) configuré pour être déclenché pour entrer un état déverrouillé, si un nombre de boucles déplacées par le signal tactile est le même qu'un nombre de référence préréglé de boucles ;
**caractérisé en ce que** :
le module de détection est configuré pour détecter une première direction de déplacement du signal tactile ;
déclencher le module de déclenchement pour entrer l'état déverrouillé exige aussi que la première direction de déplacement soit la même qu'une direction de référence préréglée et dans lequel la direction de référence préréglée est de gauche à droite ou de droite à gauche ; et **en ce que** :
le dispositif est configuré pour déterminer si le nombre de boucles déplacées par le signal tactile est le même que le nombre de référence préréglé de boucles par le procédé de détection qu'un trace de déplacement du signal tactile forme une première forme fermée, augmentant le nombre enregistré de formes fermées de un, retirer la trace de déplacement déterminée précédemment, et répéter le procédé pour des traces de déplacement subséquentes jusqu'à ce que le signal tactile soit terminé.

9. Dispositif selon la revendication 8, le dispositif comprenant en outre un module d'affichage configuré pour afficher au moins deux points de référence sur l'écran ;
le dispositif étant configuré pour déterminer si le parcours du signal tactile passe à travers les points de référence ;
déclencher le module de déclenchement pour entrer l'état déverrouillé exigeant en outre que :
le signal tactile passe à travers un certain nombre de points de référence ;
le signal tactile réponde à une condition initiale prédéterminée et/ou une condition finale prédéterminée, la condition initiale étant qu'un emplacement initial du signal tactile soit un emplacement d'un premier des points de référence, et la condition finale étant qu'un dernier point de référence à travers lequel le signal tactile passe soit un deuxième des points de référence après que le signal tactile s'est déplacé du nombre de boucles ; et que
le parcours du signal tactile passe à travers un point supplémentaire des points de référence, différent du point de référence initial ou du dernier point de référence, à une position intermédiaire le long du parcours entre le début et la fin du parcours.

10. Dispositif selon la revendication 9, dans lequel le nombre de points de référence à travers lesquels le signal tactile doit passer durant le déplacement est le même qu'un nombre de référence prédéterminé.

11. Dispositif selon la revendication 8, comprenant :
un processeur (802) ; et
une mémoire (804) pour stocker des instructions exécutables par le processeur ;
dans lequel le processeur est configuré pour :
mettre en oeuvre le procédé selon la revendication 1.

12. Support de stockage lisible non transitoire comprenant des instructions exécutables par un ou plusieurs processeurs dans un terminal qui lorsque exécutées font que l'un ou les plusieurs processeurs mettent en oeuvre le procédé selon l'une quelconque des revendications 1-7.
